# EUROPEAN PATENT APPLICATION

(11) **EP 4 583 276 A1**
(43) Date of publication of application: **09.07.2025**
(21) Application number: 23886284.1
(22) Date of filing: 01.11.2023
(51) Int. Cl.: H01M 50/24, A62C 3/16, H01M 50/627, H01M 50/375, H01M 10/658

(54) **BATTERY PACK AND DEVICE COMPRISING SAME**

(30) Priority: 01.11.2022 KR 20220143916
(71) Applicant: LG Energy Solution, Ltd., Seoul 07335 (KR)
(72) Inventor: SEO, Sung Won, Daejeon 34122 (KR); MOON, Jeong Oh, Daejeon 34122 (KR); YUN, Hyeonki, Daejeon 34122 (KR)
(74) Representative: Plasseraud IP
(86) International application number: PCT/KR2023/017295
(87) International publication number: WO 2024/096588

(57) **Abstract**

The present disclosure includes a battery pack and a device including the same. The battery pack according to an embodiment of the present disclosure includes a first pack case for mounting a plurality of battery modules that house a battery cell stack; a second pack case disposed while covering the plurality of battery modules; and an inflow port provided at an upper end of the second pack case, wherein the inflow port is connected to a flow path that transmits a fire extinguishing liquid injected from the outside.

## Description

### [TECHNICAL FIELD]

### Cross Citation with Related Application(s)

This application claims the benefit of Korean Patent Application No. 10-2022-0143916 filed on November 1, 2022 with the Korean Intellectual Property Office, the disclosure of which is incorporated herein by reference in its entirety.

The present disclosure relates to a battery pack and a device including the same, and more particularly, to a battery pack that facilitates fire suppression and ensures safety in the event of a fire, and a device including the same.

### [BACKGROUND]

As the technology development of and the demand for mobile devices have increased, the demand for secondary batteries as energy sources has rapidly increased. A variety of researches on batteries capable of meeting various needs have been carried out accordingly.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

In recent years, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series and/or in parallel.

Meanwhile, when a plurality of battery cells are connected in series or in parallel to configure a battery pack, it is common to configure a battery module composed of at least one battery cell first and then configure a battery pack by using at least one battery module and adding other components. Since battery cells constituting such a medium- or large-sized battery module are composed of secondary batteries which can be charged and discharged, such a high-output large-capacity secondary battery generates a large amount of heat during a charging and discharging process. Consequently, the electrolyte is vaporized and the internal pressure is increased, thus enabling the battery cell pouch to break.

In this case, flames may occur in the battery module and battery pack, and when a battery pack is mounted on a device such as an automobile, not only material damage but also human damage may occur. Therefore, a method of including additional parts for ensuring safety inside the battery pack has been proposed to prevent further heat diffusion in the event of a flame, but this has the problem of reducing the energy density of the battery and increasing the price due to the additional parts. Therefore, it is necessary to design other types of battery packs.

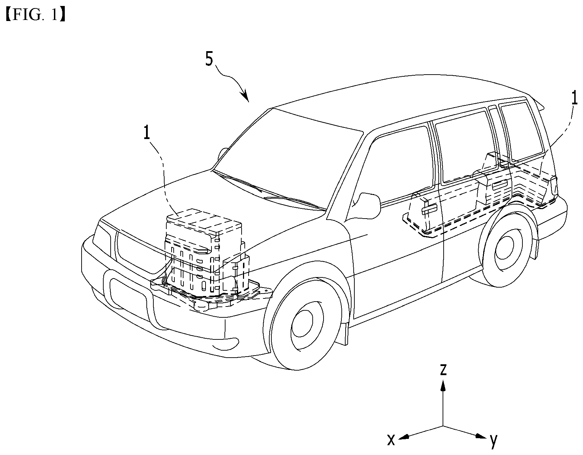

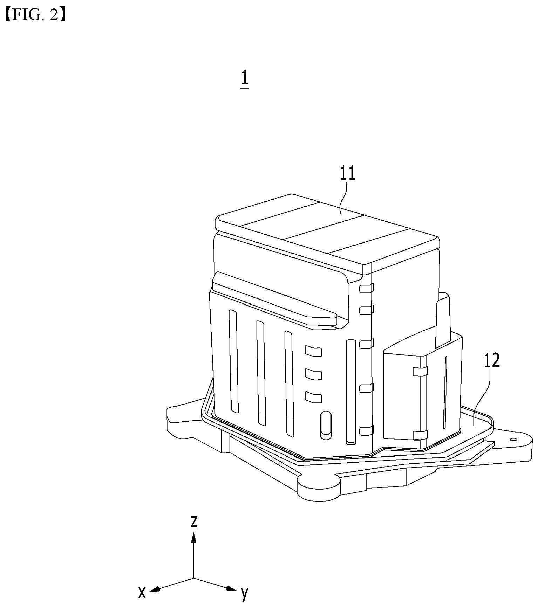

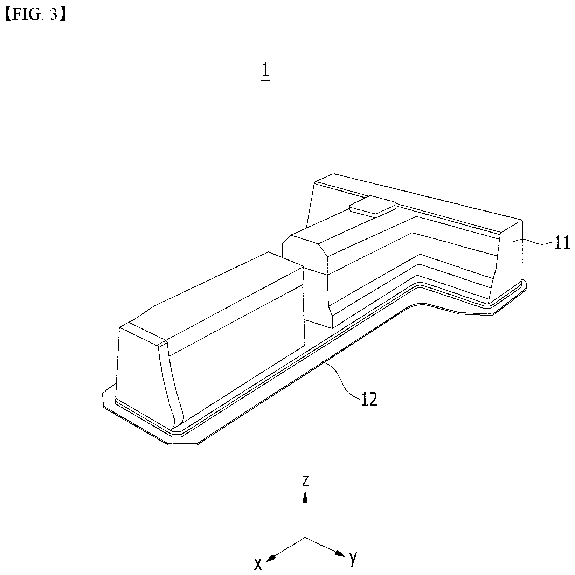

FIG. 1 is a diagram schematically showing a state in which a conventional battery pack is mounted on a device. FIGS. 2 and 3 are diagrams showing a conventional battery pack mounted on the device of FIG. 1.

Referring to FIG. 1, when a conventional battery pack 1 is mounted on a device 5 such as an automobile, the battery pack 1 is located inside the front surface part of the automobile and inside the rear surface part of the automobile. Herein, the front surface part of the automobile refers to the general traveling direction of an automobile, which is the x-axis direction, and the rear surface part of the automobile is in the opposite direction to the general traveling direction of an automobile, which is the -x-axis direction.

Referring to FIGS. 2 and 3, the battery pack 1 includes an upper pack case 11 and a lower pack case 12. The upper pack case 11 is a case that covers a battery module mounted inside the battery pack, and can have a constant volume in the height direction (z-axis direction). The lower pack case 12 may be a flat plate to which a battery module is mounted.

Since the conventional battery pack 1 has a constant volume in the height direction (z-axis direction) in this way, there is a problem that the battery pack 1 is heavy. In addition, when the battery pack 1 is mounted on an automobile, it has a structural feature that make it inevitably located at a front surface part and a rear surface part of the automobile. Therefore, in the event of a fire, there is a problem that it is difficult to directly inject water into the battery pack 1 from the outside and suppress the flame.

### [DETAILED DESCRIPTION OF THE INVENTION]

### [Technical Problem]

It is an object of the present disclosure to provide a battery pack that facilitates fire suppression and ensures safety in the event of a fire and ensures safety, and a device including the same.

However, the technical problems to be solved by embodiments of the present disclosure are not limited to the above-described problems, and can be variously expanded within the scope of the technical idea included in the present disclosure.

### [Technical Solution]

According to one embodiment of the present disclosure, there is provided a battery pack comprising: a first pack case mounted with a plurality of battery modules that including a battery cell stack; a second pack case disposed while covering the plurality of battery modules; and an inflow port provided at an upper end of the second pack case, wherein the inflow port is connected to a flow path that transmits a fire extinguishing liquid injected from an outside.

The inflow port may be provided in one area of the second pack case corresponding to a first area and a second area, which are areas where the plurality of battery modules are HV (high voltage)-connected.

The inflow port may be provided in one area of the second pack case that vertically overlaps with the first area and the second area.

The first area may be an area where the plurality of battery modules are electrically HV-connected to external electrical equipment, and the second area may be an area where the plurality of battery modules are electrically HV-connected to other adjacent ones of the plurality of battery modules.

The inflow port may be a rupture disk or a valve that is opened by an external or internal pressure of the battery pack.

The inflow port may include a hole that penetrates the second pack case, and a cover part that covers the hole.

The cover part may be formed of a material that melts at a predetermined temperature.

The cover part may be PP(Polypropylene), PC(Polycarbonate), or PET(Polyethylene terephthalate).

The battery pack according to another embodiment further comprises a heat insulating member provided inside the battery pack.

The heat insulating member includes a first heat insulating member and a second heat insulating member, and the first heat insulating member and the second heat insulating member are disposed between the plurality of battery modules and the second pack case, and may have a surface parallel to the second pack case.

The first heat insulating member may be disposed in an area excluding the first area and the second area, and the second heat insulating member may be disposed in an area where ones of the plurality of the plurality of battery modules and adjacent ones of the plurality of battery modules are electrically connected.

The heat insulating member includes a third heat insulating member, and the third heat insulating member may be disposed perpendicularly to the first pack case.

The third heat insulating member may be disposed in an area where ones of the plurality of battery modules and an adjacent one of the plurality of battery modules are electrically connected.

The heat insulating member includes a fourth heat insulating member, and the fourth heat insulating member may be disposed between a plurality of battery cells that include the battery cell stack.

The heat insulating member may be one of silicone, MICA (mica), and Aerogel.

According to another embodiment of the present disclosure, there is provided a device comprising: the above-mentioned battery pack, and a water inlet port that is connected to the flow path to inject a fire extinguishing liquid.

An area of the water inlet port may increase as it extends from the flow path toward an outer surface of the device.

The flow path may be branched correspondingly to the inflow port.

The flow path may further comprise a heat resistant member provided while wrapping around an outer surface of the flow path.

The heat resistant member may be one of silicon, MICA (mica), and Aerogel.

### [Advantageous Effects]

According to the embodiments, a fire extinguishing liquid such as water can be injected into the battery pack, thereby facilitating fire suppression and ensuring safety in the event of a fire.

In addition, since no additional parts are required for injecting a fire extinguishing liquid, the weight of the battery dose not increase and energy density can also be improved.

Effects obtainable from the present disclosure are not limited to the effects mentioned above, and additional other effects not mentioned herein will be clearly understood from the description and the appended drawings by those skilled in the art.

### [BRIEF DESCRIPTION OF THE DRAWINGS]

FIG. 1 is a diagram schematically showing a state in which a conventional battery pack is mounted on a device.
FIGS. 2 and 3 are diagrams showing a conventional battery pack mounted on the device of FIG. 1.
FIG. 4 is a diagram schematically showing a state in which a battery pack according to an embodiment of the present disclosure is mounted on a device.
FIG. 5 is a perspective view of a battery pack according to an embodiment of the present disclosure.
FIG. 6 is a schematic exploded perspective view of the battery pack of FIG. 5.
FIG. 7 is a diagram showing that the battery pack of FIG. 5 receives injection of a fire extinguishing liquid from the outside.
FIG. 8 is a cross-sectional view showing a part of the flow path of FIG. 7.
FIG. 9 is a diagram showing that the heat insulating member is disposed on the battery module.
FIG. 10 is an exploded perspective view showing the battery pack and the heat insulating member of FIG. 9.
FIG. 11 is a diagram showing a heat insulating member that is disposed between battery modules mounted on the battery pack of FIG. 6.
FIG. 12 is an exploded perspective view of the battery modules and the heat insulating member of FIG. 10.
FIG. 13 is a diagram showing a heat insulating member disposed between battery cells that constitute a battery module.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

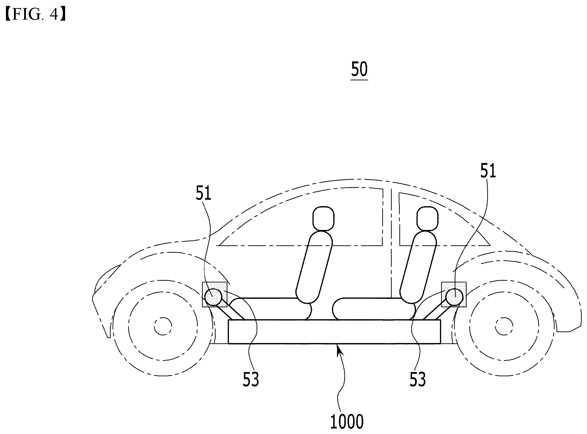

FIG. 4 is a diagram schematically showing a state in which a battery pack according to an embodiment of the present disclosure is mounted on a device.

Referring to FIG. 4, when the battery pack 1000 according to an embodiment of the present disclosure is mounted on a device such as an automobile 50, the battery pack 1000 may be disposed at a lower part of the automobile 50. Specifically, the battery pack 1000 may be disposed below the center part of the automobile 50. The center part of the automobile 50 may mean the inner area of the wheels on the basis of the wheels located at a front surface part and a rear surface part of the automobile, and the lower part of the automobile 50 may mean a position lower than a seat provided in the automobile on the basis of the ground.

The automobile 50 may include a water inlet port 51, which is a hole formed on the outer surface of the automobile 50, and a water inlet cover 53 that covers the water inlet port 51.

The water inlet port 51 may be a hole through which a fire extinguishing liquid flows into the battery pack 1000 from the outside via a flow path 60 that will be described later.

The water inlet port 51 may be formed of one or more ports. In this figure, the water inlet ports 51 are respectively formed one by one adjacent to the front surface part and the rear surface part of the automobile on the basis of the central part, but the position and number of the water inlet ports 51 in this figure are not limited as long as a fire extinguishing liquid can flow into the battery pack 1000.

The area (cross-sectional area) of the water inlet port 51 may increase as it extends from the flow path 60 toward the outer surface of the automobile 50. Thereby, the exposure area of the water inlet port 51 to the outside is increased compared to the area of the flow path 60, so that the fire extinguishing liquid can effectively flow into the water inlet port 51 when injecting the fire extinguishing liquid from a long distance. For example, the water inlet port 51 may have a truncated cone shape, but the present disclosure is not limited thereto, and various modifications and changes can be made, such as a structure in which a fire extinguishing liquid can effectively flow into the water inlet port 51.

The water inlet port 51 may include a water inlet cover 53 that covers the water inlet port 51. The water inlet cover 53 normally serves to prevent foreign materials such as water or dust from flowing into the water inlet port 51 from the outside.

Since the water inlet cover 53 is disposed at a position corresponding to the water inlet port 51 while covering the water inlet port 51, it can correspond to the position and number of the water inlet port 51. Further, the water inlet cover 53 may correspond to the size of the water inlet port 51 or may be larger than the size of the water inlet port 51.

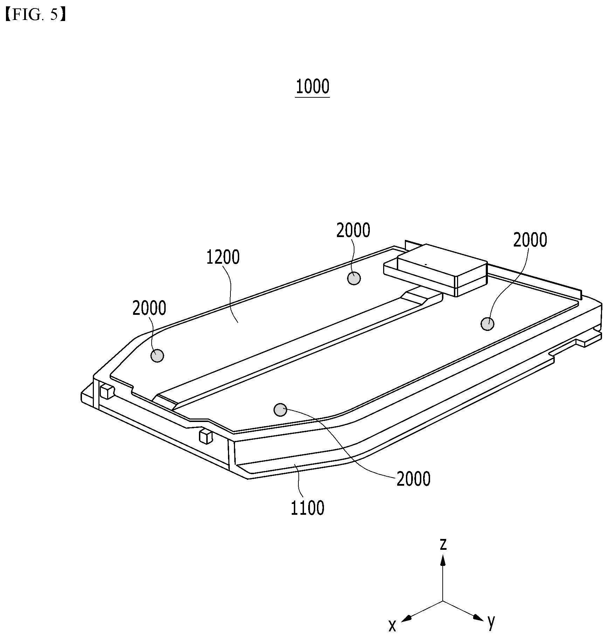

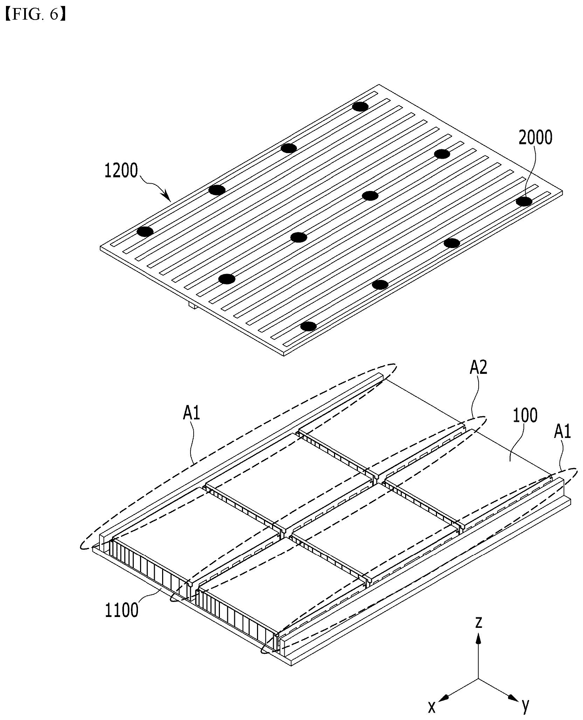

FIG. 5 is a perspective view of a battery pack according to an embodiment of the present disclosure. FIG. 6 is a schematic exploded perspective view of the battery pack of FIG. 5.

Referring to FIGS. 5 and 6, the battery pack 1000 according to the present embodiment includes a first pack case 1100 to which a plurality of battery modules 100 are mounted, and a second pack case 1200 that is disposed while covering the battery modules 100. Herein, the first pack case 1100 and the second pack case 1200 may be fastened to each other using a fastening member or joined by a method such as welding to thereby seal the inside of the battery pack 1000.

A plurality of battery modules 100 may be mounted onto the first pack case 1100. The first pack case 1100 may include a side plate 1110 that protrudes in the height direction (z-axis direction) of the battery module 100 and extends along the edge of the first pack case 1100.

The side plate 1110 may be a plate that covers both side surfaces of the plurality of battery modules 100. The side plate 1110 may be disposed along all edges of the first pack case 1100, or may be partially disposed only at one edge area of the first pack case 1100 as illustrated in this figure. The edge of the side plate 1110 corresponds to one edge of the first pack case 1100 and one edge of the second pack case 1200, and can be fastened using a fastening member or joined by a method such as welding.

The second pack case 1200 may be a case that covers a plurality of battery modules 100. In one example, the second pack case 1200 may have a flat plate shape. The second pack case 1200 may have a size corresponding to the size of the first pack case 1100.

An inflow port 2000 may be located in one area of the second pack case 1200.

The inflow port 2000 is a passage through which a fire extinguishing liquid injected from the water inlet port 51 in case of a fire flows into the battery pack 1000 along a flow path, and may be located on the second pack case 1200.

The inflow port 2000 may be formed of at least one port. In one example, the number of the inflow ports may be four as illustrated in FIG. 5, or may be 12 as illustrated in FIG. 6. The number of the inflow port 2000 is not limited to those illustrated in this figure, and can be changed.

The inflow port 2000 may be located in one area of the second pack case 1200 corresponding to the first area A1 and the second area A2 inside the battery pack 1000. The inflow port 2000 may be located in one area of the second pack case 1200 that overlaps with the first area A1 and the second area A2, and specifically, it may be located in one area of the second pack case 1200 that vertically overlaps with the first area A1 and the second area A2.

The first area A1 and the second area A2 are areas where the battery module 100 is electrically HV(high voltage)-connected. Specifically, the first area A1 is an area where the battery module 100 is electrically HV-connected to external electrical equipment such as a BDU (battery disconnect unit) through a terminal busbar, and the second area A2 is an area where opposing battery modules 100 are electrically HV-connected to each other through a module connector or the like. That is, the first area A1 and the second area A2 are areas where high voltage flows, and may be areas where the temperature is relatively high compared to other areas in the battery pack 1000 and thus, the possibility of ignition is high.

Therefore, the inflow port 2000 is located in one area of the second pack case 1200 corresponding to the first area A1 and the second area A2, and therefore, when a fire ignites, the fire extinguishing liquid is applied around the corresponding area, thereby facilitating fire suppression.

The inflow port 2000 may be formed in various shapes. In one example, the inflow port 2000 may be opened by a predetermined pressure within the battery pack 1000 or pressure caused by a fire extinguishing liquid flowing from outside the battery pack 1000. Preferably, the inflow port 2000 may be a rupture disk or a valve.

In another example, the inflow port 2000 may include a hole that penetrates the second pack case 1200 and a cover part that covers the hole. At this time, the cover part may be made of a material that melts at a predetermined temperature, and may be formed of a material that can melt in the event of a fire. Specifically, the material forming the cover part may be a plastic material. In one example, the cover part may be made of PP(polypropylene), PC(polycarbonate), or PET(polyethylene terephthalate).

According to the above illustrative examples, the inflow port 2000 is not normally opened, thereby separating the inside of the battery pack 1000 from the external environment. Therefore, in normal times, the performance of the battery can be maintained by preventing foreign materials such as dust and moisture from flowing into the battery pack 1000 from the outside. However, if the battery pack catches fire and reaches a predetermined temperature or pressure or higher, the inflow port 2000 is opened and the fire extinguishing liquid injected from the water inlet port 51 flows into the battery pack 1000 to suppress the fire, thereby facilitating fire suppression and ensuring safety in the event of a fire.

Further, the battery pack 1000 according to the present embodiment including the above configuration corresponds to a model that is applied only to electric vehicles, unlike a conventional battery pack of FIGS. 2 and 3, which constitutes an automobile 5 including a conventional internal combustion engine. Therefore, unlike the conventional battery pack, the battery pack 1000 according to the present embodiment is different in the mounting position of the battery module 100, the HV connection structure, the height and shape of the battery pack 1000, and the like. That is, the battery pack 1000 according to the present embodiment can suppress flames more directly and effectively than conventional battery packs, because the position of the inflow port 2000, which receives inflow of a fire extinguishing liquid from the outside, is located in one area of the pack case corresponding to the area where the battery module 100 is HV-connected.

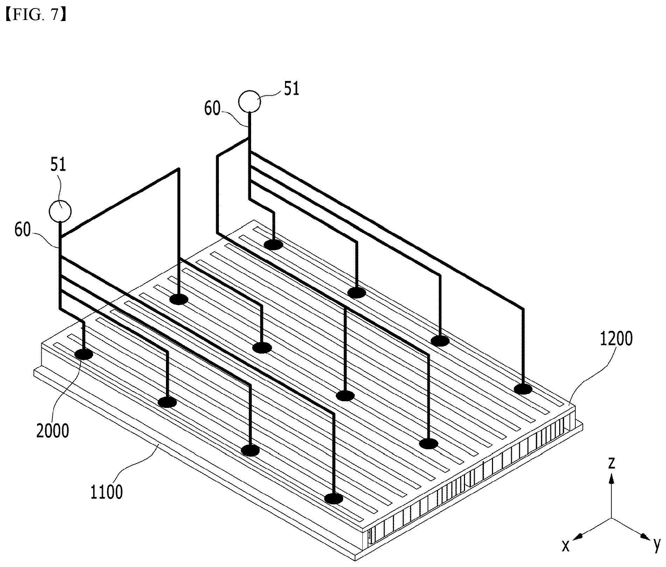

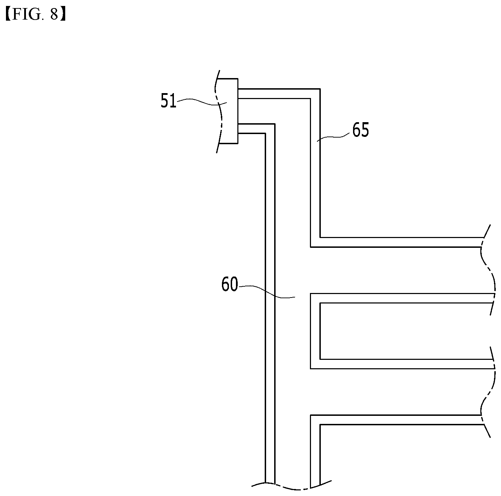

FIG. 7 is a diagram showing that the battery pack of FIG. 5 receives injection of a fire extinguishing liquid from the outside. FIG. 8 is a cross-sectional view showing a part of the flow path of FIG. 7.

Referring to FIGS. 7 and 8, the flow path 60 connected to the water inlet port 51 is connected to the inflow port 2000, and the fire extinguishing liquid injected from the water inlet port 51 can move along the flow path 60 and inject inside the battery pack 1000 via the inflow port 2000.

The flow path 60 may be a pipe, and a heat resistant member 65 may be provided on the outer surface of the flow path 60. Specifically, the heat resistant member 65 may be provided while wrapping around the outer surface of the flow path 60. Further, the heat resistant member 65 may be disposed while surrounding not only the flow path 60 connected to the water inlet port 51 but also the outer surfaces of the branched flow path 60.

Since the heat resistant member 65 prevents the pipes constituting the flow path 60 from being damaged or melted in the event of a fire, it is possible to prevent the fire extinguishing liquid from flowing into the battery pack 1000 due to damage to the flow path 60. The heat resistant member 65 may be formed of a material that does not melt at high temperatures and is resistant to heat. In one example, the heat resistant member 65 may be silicon, MICA (mica), Aerogel, etc.

That is, the flow path 60 can transmit the fire extinguishing liquid injected from the water inlet port 51 to the inflow port 2000 while being connected to the water inlet port 51. In this case, a plurality of branched flow paths 60 may be located respectively corresponding to the inflow port 2000.

The flow path 60 may be branched into various shapes. The flow path 60 may be in the form of a manifold. In this figure, a plurality of flow paths 60 branched from the two water inlet ports 51 are illustrated as being located at the same number of the inflow ports 2000, respectively, but differently from this, the flow path 60 may be branched and connected to the inflow port 2000, which is one exemplary configuration.

The flow path 60 may be located in a state of being in contact with the inflow port 2000, or may be located in a state of being inserted into the inflow port 2000. In this case, the size of the inflow port 2000 may correspond to the size of the flow path 60 that is in contact with or inserted into the inflow port 2000. Alternatively, the size of the inflow port 2000 may be larger than the size of the flow path 60 due to ease of assembly between the flow path 60 and the inflow port 2000 or for manufacturing process reasons.

In other words, as the flow path 60 connected to the water inlet port 51 is branched correspondingly to the inflow port 2000, the fire extinguishing liquid can be applied to a large number of inflow ports 2000 even with a small number of water inlet ports 51, so that fire suppression is quick and easy, and fire extinguishing efficiency and safety can be ensured.

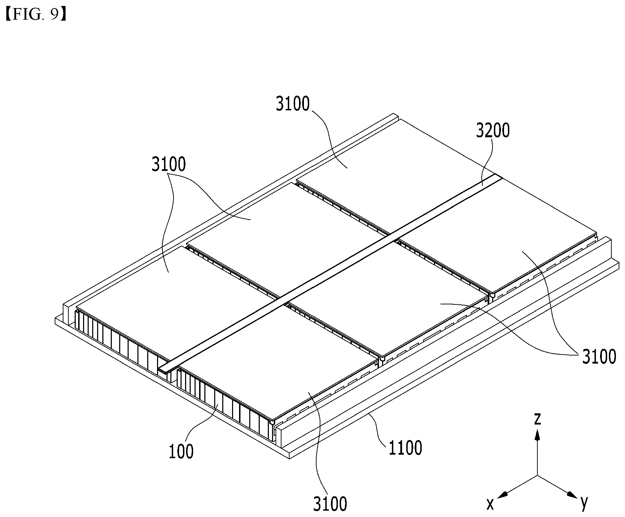

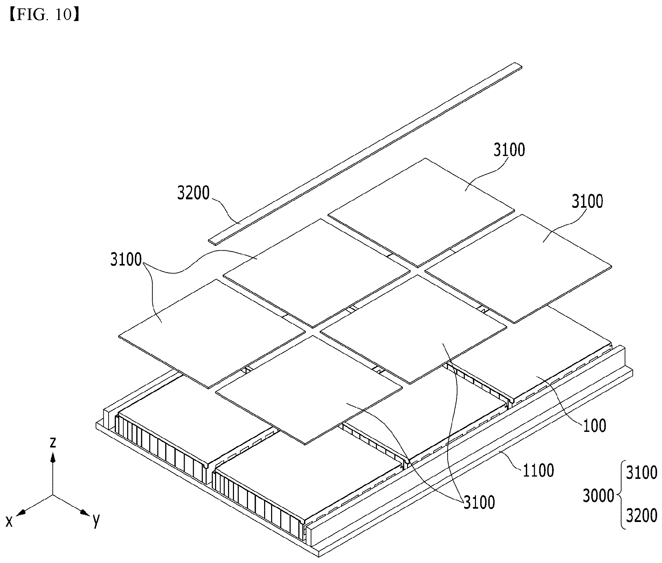

FIG. 9 is a diagram showing that the heat insulating member is disposed on the battery module. FIG. 10 is an exploded perspective view showing the battery pack and the heat insulating member of FIG. 9. Referring to FIGS. 9 and 10, the heat insulating member 3000 is disposed inside the battery pack 1000, and can delay the exposure time of the flame from the battery pack 1000 to the outside when a flame occurs.

The heat insulating member 3000 may be disposed on the battery module 100. Specifically, the heat insulating member 3000 may be disposed between the battery module 100 and the second pack case (not shown).

The heat insulating member 3000 may be a material having heat insulating properties and heat resistance. In one example, the heat insulating member 3000 may be silicon, MICA (mica), Aerogel, and the like.

The heat insulating member 3000 includes a first heat insulating member 3100 and/or a second heat insulating member 3200. The first heat insulating member 3100 and the second heat insulating member 3200 may be provided while having a surface parallel to the second pack case.

The first heat insulating member 3100 may be disposed on the battery module 100. Specifically, the first heat insulating member 3100 may be disposed on one surface of the battery module 100 in the height direction (z-axis direction). Consequently, when a flame occurs in the battery module, the time required for the flame to be exposed to the outside through the second pack case 1200 of the battery pack 1000 can be delayed. Further, by preventing the heat generated in the battery module 100 from being directly transmitted to the second pack case 1200, the flame generation time can be delayed and human/material damage can be minimized.

The first heat insulating member 3100 may correspond to the area of the battery module 100, or may have an area larger than the area of the battery module 100.

First, the area of the first heat insulating member 3100 may correspond to the area of the battery module 100. Specifically, the area of the first heat insulating member 3100 may correspond to the area of one surface of the battery module 100 in the height direction (z-axis direction). In this case, the number of first heat insulating member 3100 may correspond to the number of battery module 100.

Alternatively, the area of the first heat insulating member 3100 may be larger than the area of one surface of the battery module 100 in the height direction (z-axis direction). **In** this case, the first heat insulating member 3100 may be disposed while covering one or more battery modules 100, and the number of first heat insulating members 3100 may be smaller than the number of battery modules 100. However, even in this case, the first heat insulating member 3100 may not be disposed while covering the first area A1 and the second area A2 inside the battery pack. That is, the first heat insulating member 3100 is disposed while covering only the battery module 100 but is not disposed while covering the first area A1 and the second area A2, so that the fire extinguishing liquid applied from the inflow port 2000 located in one area of the second pack case 1200 corresponding to the first area A1 and the second area A2 can more effectively flow into the battery module 100 and the battery cell.

The second heat insulating member 3200 may be disposed in an area corresponding to an area where adjacent battery modules 100 are electrically connected. For example, the second heat insulating member 3200 may also be disposed in an area corresponding to the second area A2 of FIG. 6. In this case, the area of the second heat insulating member 3200 may correspond to the area of the second area A2. The second heat insulating member 3200 may be disposed while covering the second area A2.

Since the second heat insulating member 3200 is disposed, heat generated in the second area A2 is prevented from being transmitted to the second pack case 1200 or other components of the battery pack, thereby suppressing the occurrence of flame. Further, if a flame occurs between the battery modules 100, high temperature heat and flame are not directly transmitted to the second pack case 1200 of the battery pack 1000, thereby delaying the exposure time of the flame to the outside, and ensuring safety.

However, even if the second heat insulating member 3200 is disposed while covering the second area A2, the first area A1 to which the battery module 100 is electrically HV-connected is still opened. Consequently, the fire extinguishing liquid applied into the battery pack 1000 via the inflow port 2000 can directly and effectively flow into the battery module 100 and the battery cells.

In this figure, the first heat insulating member 3100 and the second heat insulating member 3200 are illustrated as being disposed together inside the battery pack 1000, but is not limited thereto, and the first heat insulating member 3100 or the second heat insulating member 3200 may be disposed individually, or may be provided in a combination thereof.

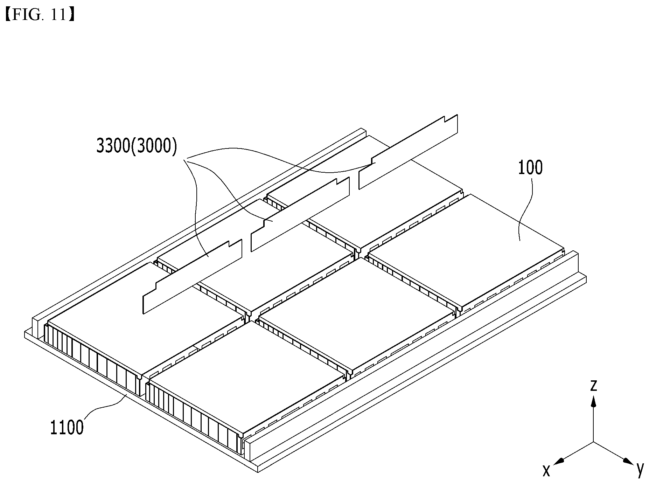

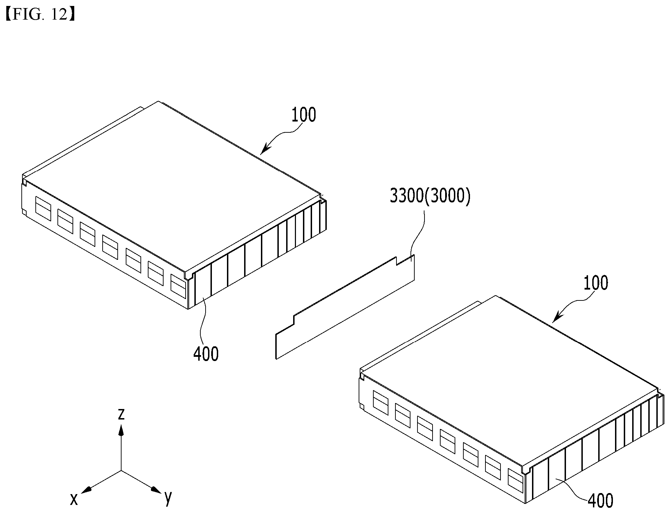

FIG. 11 is a diagram showing a heat insulating member that is disposed between battery modules mounted on the battery pack of FIG. 6. FIG. 12 is an exploded perspective view of the battery modules and the heat insulating member of FIG. 10.

The content described in FIGS. 11 and 12 is a modification of an embodiment of the present disclosure described above, and a detailed description of the configuration similar to the configuration described above will be omitted.

Referring to FIGS. 11 and 12, the heat insulating member 3000 includes a third heat insulating member 3300, and the third heat insulating member 3300 may be disposed perpendicularly to the first pack case 1100.

The third heat insulating member 3300 may be disposed between the battery modules 100. Specifically, the third heat insulating member 3300 may be disposed in an area where adjacent battery modules 100 are electrically connected to each other.

In one example, the third heat insulating member 3300 may be disposed in an area corresponding to the second area A2 of FIG. 6. The third heat insulating member 3300 may be disposed between adjacent battery modules 100 in the second area A2 of FIG. 6.

Specifically, one surface of the third heat insulating member 3300 is disposed facing the front surface of one of the adjacent battery modules 100, and the other surface of the third heat insulating member 3300 may be disposed facing the rear surface of the remaining battery module 100 among the adjacent battery modules 100. The front surface and the rear surface of the battery module 100 are surfaces where the battery module 100 can be electrically connected to adjacent battery modules 100 or other electrical equipment, which means the y-axis direction and the -y-axis direction in this figure.

The shape of the third heat insulating member 3300 may correspond to the shape of the front surface or the rear surface of the battery module 100. For example, the width (x-axis direction) of the third heat insulating member 3300 may correspond to the width (x-axis direction) of the battery module 100, and the height (z-axis direction) of the third heat insulating member 3300 may correspond to the height (z-axis direction) of the battery module 100. That is, the third heat insulating member 3300 may correspond to the size of the front surface or the rear surface of the battery module 100. However, the shape of the third heat insulating member 3300 is not limited thereto. In one example, although not illustrated in this figure, the shape of the third heat insulating member 3300 may be larger or smaller than the shape of the front surface or the rear surface of the battery module 100. When the shape of the third heat insulating member 3300 is larger than the shape of the front surface or the rear surface of the battery module 100, the third heat insulating member 3300 may be disposed while covering the front surface or the rear surface of one or more battery modules 100.

The third heat insulating member 3300 is disposed between adjacent battery modules 100 in an area where the battery modules 100 are electrically connected to each other, thereby preventing the heat transfer caused by high voltage from becoming easy, and suppressing the occurrence of fire as much as possible. Further, even if a flame occurs in one battery module 100, it is possible to suppress the flame from moving to an adjacent battery module as much as possible, thereby preventing a thermal runaway phenomenon.

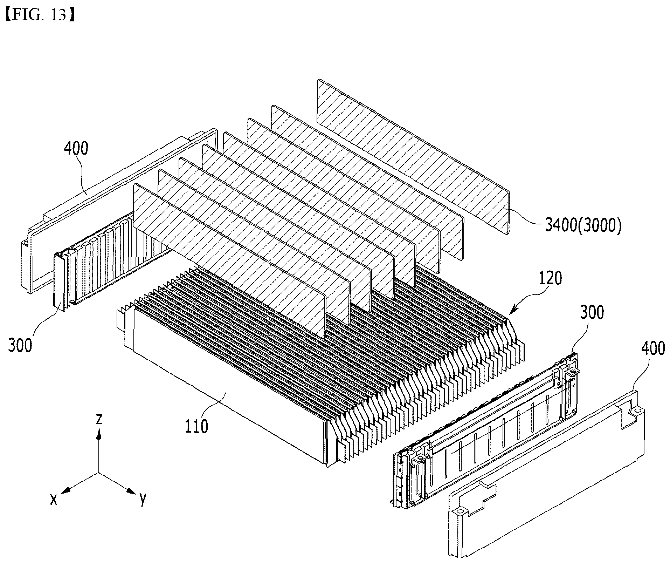

FIG. 13 is a diagram showing a heat insulating member disposed between battery cells that constitute a battery module.

Referring to FIG. 13, the battery module 100 according to an embodiment of the present disclosure may include a battery cell stack 120 in which a plurality of battery cells 110 are stacked in one direction, a heat insulating member 3000 that is disposed between the battery cells 110 constituting the battery cell stack 120, module frames 210 and 220 that house the battery cell stack 120, a busbar structure 300 that is disposed on a front surface and/or a rear surface of the battery cell stack 120, and an end plate 400 that covers a front surface and/or a rear surface of the battery cell stack 120.

Herein, since the type of the battery cell 110 is not particularly limited, it may be a pouch-type secondary battery or a prismatic secondary battery, but it is preferably a pouch-type secondary battery.

The battery cells 110 may be composed of a plurality of cells, and a plurality of battery cells 110 are stacked so as to be electrically connected to each other, thereby forming a battery cell stack 120. As illustrated in this figure, the plurality of battery cells 110 may be stacked along a direction parallel to the x-axis.

The module frames 210 and 220 may include a first frame 210 and a second frame 220, and the battery cell stack 120 may be mounted between the first frame 210 and the second frame 220 to configure the battery module 100. However, the module frames 210 and 220 are not limited to the contents described above, and may be a metal plate-shaped mono frame in which the upper and lower surfaces and both side surfaces integrated.

The busbar structure 300 includes a busbar frame and a busbar mounted on one surface of the busbar frame. The busbar may be mounted on one surface of the busbar frame, and may be for electrically connecting the battery cell stack 120 or battery cells 110 to an external device circuit.

The end plate 400 may be for protecting the battery cell stack 120 and the electrical equipment connected thereto from external physical impact by sealing the open surface of the module frame 200. For this purpose, the end plate 400 may be made from a material having a predetermined strength. For example, the end plate 400 may include a metal such as aluminum.

The heat insulating member 3000 may be disposed between battery cells 110 constituting the battery cell stack 120, which is a fourth heat insulating member 3400.

At least one fourth heat insulating member 3400 may be provided between the battery cell stacks 120.

The size of the fourth heat insulating member 3400 may correspond to the size of the battery cell 110. Specifically, the fourth heat insulating member 3400 may correspond to the size of one surface of the battery cell located facing the fourth heat insulating member 3400. For example, the length (y-axis direction) of the fourth heat insulating member 3400 may correspond to the length (y-axis direction) of the battery cell 110, and the height (z-axis direction) of the fourth heat insulating member 3400 may correspond to the height (z-axis direction) of the battery cell 110. However, the shape of the fourth heat insulating member 3400 may be larger or smaller than the size of the battery cell 110, although the shape is not limited thereto and is not illustrated in this figure.

The fourth heat insulating member 3400 is disposed between the battery cells 110 constituting the battery cell stack 120, so that heat generated from the battery cell 110 due to charging and discharging of the battery may not be easily transferred to adjacent battery cells 110. This is because, when a large amount of high temperature heat is generated from the battery cell 110, the electrolyte is vaporized and the internal pressure of the battery cell 110 is increased, thereby enabling the battery cell pouch to break, which may cause a fire or explosion. Therefore, the fourth heat insulating member 3400 does not facilitate heat transfer between the battery cells 110, thereby minimizing the occurrence of a fire. Further, even if the battery cell 110 swells due to charging and discharging of the battery, the degree of swelling can be suppressed because the fourth heat insulating member 3400 is disposed.

The heat insulating members 3000 described in FIGS. 9 to 13 may be provided in a battery module and a battery pack individually or in various combinations.

The above-mentioned battery module and battery pack including the same can be applied to various devices. Such devices can be applied to vehicle means such as an electric bike, an electric vehicle, and a hybrid electric vehicle, but the present disclosure is not limited thereto, and also can be applied to various devices capable of using the battery module and the battery pack including the same, which falls within the scope of the present disclosure.

The invention has been described in detail above with reference to preferred embodiments thereof. However, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

50: automobile
51: water inlet port
60: flow path
65: heat resistant member
100: battery module
1000: battery pack
1100: first pack case
1200: second pack case
2000: inflow port
3000: heat insulating member

## Claims

1. A battery pack comprising:
a first pack case mounted with a plurality of battery modules that comprise a battery cell stack;
a second pack case disposed while covering the plurality of battery modules; and
an inflow port provided at an upper end of the second pack case,
wherein the inflow port is connected to a flow path that transmits a fire extinguishing liquid injected from an outside.

2. The battery pack of claim 1, wherein:
the inflow port is provided in one area of the second pack case corresponding to a first area and a second area, which are areas where the plurality of battery modules are HV (high voltage)-connected.

3. The battery pack of claim 2, wherein:
the inflow port is provided in one area of the second pack case that vertically overlaps with the first area and the second area.

4. The battery pack of claim 2, wherein:
the first area is an area where the plurality of battery modules are electrically HV-connected to external electrical equipment, and
the second area is an area where the plurality of battery modules are electrically HV-connected to other adjacent ones of the plurality of battery modules.

5. The battery pack of claim 1, wherein:
the inflow port is a rupture disk or a valve that is opened by an external or internal pressure of the battery pack.

6. The battery pack of claim 1, wherein:
the inflow port includes a hole that penetrates the second pack case, and a cover part that covers the hole.

7. The battery pack of claim 6, wherein:
the cover part is formed of a material that melts at a predetermined temperature.

8. The battery pack of claim 7, wherein:
the cover part is PP(Polypropylene), PC(Polycarbonate), or PET(Polyethylene terephthalate).

9. The battery pack of claim 2,
further comprising a heat insulating member provided inside the battery pack.

10. The battery pack of claim 9, wherein:
the heat insulating member includes a first heat insulating member and a second heat insulating member, and
the first heat insulating member and the second heat insulating member are disposed between the plurality of battery modules and the second pack case, and have a surface parallel to the second pack case.

11. The battery pack of claim 10, wherein:
the first heat insulating member is disposed in an area excluding the first area and the second area, and
the second heat insulating member is disposed in an area where ones of the plurality of battery modules and adjacent ones of the plurality of battery modules are electrically connected.

12. The battery pack of claim 9, wherein:
the heat insulating member includes a third heat insulating member, and
the third heat insulating member is disposed perpendicularly to the first pack case.

13. The battery pack of claim 12, wherein:
the third heat insulating member is disposed in an area where ones of the plurality of battery modules and an adjacent one of the plurality of battery modules are electrically connected.

14. The battery pack of claim 9, wherein:
the heat insulating member includes a fourth heat insulating member, and
the fourth heat insulating member is disposed between a plurality of battery cells that comprise the battery cell stack.

15. The battery pack of claim 9, wherein:
the heat insulating member is one of silicon, MICA (mica), and Aerogel.

16. A device comprising:
the battery pack of claim 1, and
a water inlet port that is connected to the flow path to inject a fire extinguishing liquid.

17. The device of claim 16, wherein:
an area of the water inlet port increases as it extends from the flow path toward an outer surface of the device.

18. The device of claim 16, wherein:
the flow path is branched correspondingly to the inflow port.

19. The device of claim 16, wherein:
the flow path further comprises a heat resistant member provided while wrapping around an outer surface of the flow path.

20. The device of claim 19, wherein:
the heat resistant member is one of silicon, MICA (mica), and Aerogel.
